(19) Europäisches Patentamt
European Patent Office
Office européen des brevets

(11) Veröffentlichungsnummer: **0 513 500 A1**

(12) # EUROPÄISCHE PATENTANMELDUNG

(21) Anmeldenummer: **92104939.1**

(22) Anmeldetag: **21.03.92**

(51) Int. Cl.5: **C08J 9/26**, //C08L27/12

(30) Priorität: **15.04.91 DE 4112248**

(43) Veröffentlichungstag der Anmeldung:
**19.11.92 Patentblatt 92/47**

(84) Benannte Vertragsstaaten:
**BE DE FR GB**

(71) Anmelder: **BASF Aktiengesellschaft**
**Carl-Bosch-Strasse 38**
**W-6700 Ludwigshafen(DE)**

(72) Erfinder: **Sterzel, Hans-Josef, Dr.**
**Wasgauring 3**
**W-6701 Dannstadt-Schauernheim(DE)**
Erfinder: **Meyer, Marion, Dr.**
**Werderstrasse 20**
**W-6800 Mannheim 1(DE)**

(54) **Verfahren zur Herstellung offenporöser, fasriger Teile aus Polytetrafluorethylen durch Spritzguss oder Extrusion.**

(57) Verfahren zur Herstellung offenporösere Teile aus Polytetrafluorethylen durch Spritzguß oder Extrusion oder Kalandrieren, dadurch gekennzeichnet, daß man diese pulverförmige PTFE in einer Schmelze aus einem Polyacetal oder einer Mischung von Polyacetalen dispergiert, die so erhaltene Mischung abkühlt, granuliert, das Granulat einer thermoplastischen Verarbeitung zuführt, durch Spritzgießen Formkörper oder durch Extrusion oder Kalandrieren Folien oder Profile herstellt, die Formkörper einem Medium aussetzt, das eine sauer reagierende chemische Verbindung enthält, wodurch das Polyacetal depolymerisiert wird und der offen porösere Formkörper zurückbleibt.

EP 0 513 500 A1

Polymere Werkstoffe haben vielfältige Einsätze als Materialien in allen Bereichen der Technik gefunden. Insbesondere die thermoplastische Verarbeitbarkeit hat den thermoplastischen Kunststoffen zu einer raschen Marktdurchdringung verholfen. So erlaubt das Spritzgießverfahren die Massenfertigung komplex geformter Teile ohne die Notwendigkeit einer Nachbearbeitung. Durch Extrusion lassen sich Folien und komplexe Profile herstellen.

Es sind auch Polymere entwickelt worden, die vorteilhafte Eigenschaften aufweisen, die aber leider nicht thermoplastisch verarbeitbar sind.

Ein Beispiel für derartige Polymere ist das Polytetrafluorethylen, das aufgrund der extrem hohen Viskosität der Schmelze nicht durch Spritzguß oder Extrusion verarbeitbar ist. PTFE ist ein technisch wertvolles Material aufgrund seiner ausgezeichneten Eigenschaften, wie extrem hoher Chemikalienbeständigkeit, einem großen Anwendungstemperaturbereich von -200 bis +260$^0$C, guten mechanischen Eigenschaften (hohe Reißfestigkeit und Abriebbeständigkeit) sowie sehr gutem elektrischen Isoliervermögen. Poröse Formkörper aus PTFE werden auf vielen Gebieten angewendet, z.B. als Filter für korrosive Stoffe, als Zelldiaphragmen oder Trennmembranen. Es sind mehrere Herstellungsverfahren für poröse PTFE-Produkte bekannt: a) durch Verspinnen oder Verweben von PTFE-Fasern oder Garnen zu Folien, b) durch Vermischen von PTFE-Pulver mit einem aus dem Formkörper herauslösbaren organischen oder anorganischen Pulver, Verformung der Mischung zur gewünschten Form und Herauslösen des Pulvers aus dem Formkörper und c) durch einen Prozess, bei dem man eine Mischung aus PTFE-Pulver und einem flüssigen Schmiermittel durch Extrusion oder Walzen verformt, das Schmiermittel entfernt und den Formkörper dann in gesintertem oder ungesintertem Zustand zum Porösmachen verstreckt.

Prozeß (a) ist teuer und kompliziert, da PTFE-Fasern durch Verspinnen von Dispersionen erhalten werden, in denen die PTFE-Teilchen in einer bestimmten Morphologie (Nadelform, l/d > 5) vorliegen müssen. Die Nadelform wird nur unter speziellen Bedingungen während der Polymerisation ausgebildet. Die nach diesem Verfahren hergestellten Produkte haben in der Regel große Poren und eine breite Porengrößenverteilung.

Das Eluierverfahren (b) ist nicht nur weil es einen hohen Extraktionsmitteleinsatz fordert problematisch, sondern auch weil es sehr aufwendig ist, die porenbildende Substanz völlig zu entfernen - DE-AS 25 34 464 beschreibt beispielsweise, daß das Entfernen von $CaCO_3$ aus einer 2 mm dicken Folie ein 10tägiges Eintauchen in ein Säurebad erfordert - und oft ein Teil des porenbildenden Pulvers im Formkörper zurückgehalten wird, was die Eigenschaften des Produktes beeinträchtigt.

Beim Verstreckungsverfahren treten mehrere Probleme auf. Verstrecken des ungesinterten Produktes kann aufgrund der geringen mechanischen Festigkeit schon unter geringen äußeren Kräften zu Brüchen oder Rissen führen. Das Produkt wird daher im allgemeinen im verstreckten Zustand gesintert, um so die Festigkeit zu erhöhen. Auf diese Weise ist es möglich, poröse Körper mit höherer mechanischer Festigkeit zu erhalten, aber das Verfahren ist technisch sehr aufwendig. Zur überwindung dieser Schwierigkeiten kann das Verstrecken und Sintern des Produkts gleichzeitig geschehen, wie in DE-PS 29 21 367 oder DE-OS 37 04 217 beschrieben wird. Bei diesen Verfahren ist jedoch erforderlich, daß die Extremitäten des Formkörpers auf der Achse der Verstreckungsrichtung außerhalb der Heizzone liegen und nur der Teil, der sich in der Heizzone befindet, bei Temperaturen oberhalb des Schmelzpunktes unter gleichzeitigem Verstrekken gesintert wird. Dieser Prozeß aber fordert komplizierte Herstellungsvorrichtungen.

Keiner der erwähnten Prozesse erlaubt es, mechanisch stabile, offenporöse PTFE-Formkörper in einem Massenfertigungsverfahren ohne technisch aufwendige oder teure Fertigungsschritte herzustellen.

Ziel der Erfindung war es daher, offenporöse PTFE-Produkte durch das Spritzgußverfahren als Formgebungsverfahren für die Massenfertigung komplex gestalteter Teile und durch die Extrusion zur Herstellung von Profilen oder Folien zu erhalten.

Die Aufgabe wird dadurch gelöst, daß man PTFE-Pulver in einer Schmelze aus einem Polyacetal oder einer Mischung aus Polyacetalen dispergiert, die so erhaltene Mischung abkühlt und granuliert, das Granulat einer Spritzgießmaschine, einem Extruder oder einem Kalander zuführt und die gewünschten Formkörper durch die Spritzgußverarbeitung, Extrusion durch Düsen oder Kalandrieren erhält. Es wurde nun gefunden, daß sich bei diesen Vorgängen das Polytetrafluorethylenpulver zu faserförmigen Strukturen zusammenlagert. Die nach der Spritzgußverarbeitung oder Extrusion erhaltenen Formkörper werden einem Medium ausgesetzt, das eine sauer reagierende chemische Verbindung enthält und dadurch das Polyacetal depolymerisiert. Die zurückbleibenden Formkörper sind offenporös und auch ohne nachträgliches Sintern mechanisch sehr stabil, so daß sich auf diese Weise dreidimensionale offenporöse PTFE-Formkörper herstellen lassen, die aufgrund von Gestalt und Werkstoffeigenschaften beispielsweise als Filter, Membranen oder Maschinenbauteile wie Dichtungen oder Lager genutzt werden können. Ausgestaltungen des erfindungsgemäßen Verfahrens sowie Massen zur Herstellung der erfindungsgemäßen Formkörper sind Gegenstand der Patentansprüche

2 bis 10.

Im folgenden wird die Erfindung detailiert beschrieben:

Zur Herstellung von Formteilen aus anorganischen Materialien ist bekannt, daß man ein Keramikpulver oder ein Metallpulver mit einem thermoplastischen Harz vermischt, die Mischung zu einem Formkörper verformt, das thermoplastische Harz entfernt und anschließend diesen porösen Formkörper zu dem eigentlichen Formkörper versintert. Als thermoplastisches Harz bzw. Bindemittel werden z.B. Polystyrol, Polypropylen, Polyethylen und Ethylen-Vinylacetat-Copolymere eingesetzt. Diese Bindemittel werden aus dem Formkörper durch Erhitzen auf Temperaturen von 300 bis 550$^0$C während 3 bis 8 Stunden entfernt. Dabei werden die Bindemittel thermisch gespalten. Es muß sehr vorsichtig und langsam auf diese Temperaturen erhitzt werden, damit der Formkörper nicht durch unkontrollierten Zerfall der organischen Substanz und damit verbundener Rißbildung geschädigt wird. Aus diesem Grunde soll die Aufheiztemperatur nur 4$^0$C/Stunde betragen. In der US-PS 4 671 912 werden sogar niedrigere Aufheiztemperaturen von 1 bis 2$^0$C/Stunde, zumindest solange, bis die Hälfte des Bindemittels entfernt ist, empfohlen. Diese langen Aufheizperioden von mehreren Tagen vermindern die Wirtschaftlichkeit dieser Verfahren stark.

Zur Beschleunigung der Aufheizzeiten wird in der EP-PS 115 104 empfohlen, als Bindemittel ein Gemisch aus einem oxidierten Paraffinwachs oder einem oxidierten mikrokristallinen Wachs mit einer höheren Fettsäure einzusetzen. In der EP-PS 114 746 wird als Bindemittel ein Polyacetal vorgeschlagen.

Bei allen diesen Verfahren, bei denen Thermoplaste oder Wachse eingesetzt werden, muß der Formkörper zwecks pyrolytischer Entfernung des Bindemittels auf Temperaturen oberhalb des Erweichungspunktes des Bindemittels erhitzt werden, wodurch die Gefahr einer Verformung besteht.

Derartige Verfahren wären für die thermoplastische Verarbeitung von PTFE-Pulvern auch nicht anwendbar, weil zur pyrolytischen Entfernung des Binders Temperaturen bis zu 550$^0$C notwendig sind, Temperaturen, bei denen sich das PTFE bereits zersetzt.

Es ist aber auch bekannt, das Bindemittel aus dem Grünling nicht pyrolytisch, sondern durch Extraktion mit einem Lösungsmittel zu entfernen. Gemäß der JP-OS 62/278160 wird als Lösungsmittel überkritisches Kohlendioxid bei 60$^0$C und einem Druck von 200 kg/cm$^2$, gemäß der EP-PS 206 685 flüssiges Kohlendioxid bei Temperaturen von -30$^0$C bis 31,1$^0$C eingesetzt. Für die Durchführung dieser Verfahren benötigt man jedoch spezielle Apparaturen.

Demgegenüber wurde ein Verfahren bekannt (DE 4 021 741.8), das es erlaubt, die Binderphase schnell und ohne die beschriebenen Nachteile aus dem Formkörper zu entfernen. Dort wird als Binder ein Polyacetal eingesetzt, das durch Behandeln der Formkörper mit einer Atmosphäre, die Salpetersäure oder Bortrifluorid oder Bortrifluorid-Addukte enthält bei Temperaturen von 100 bis 150$^0$C rückstandsfrei depolymerisiert wird.

Als Polyacetal setzt man sowohl Homopolymerisate als auch Copolymerisate von Polyoxymethylen mit Molmassen von 25 000 bis 75 000 ein. Unter Copolymerisaten seien die Polymerisate des Trioxans mit z.B. Ethylenoxid, 1,3-Dioxolan oder 1.3-Dioxepan verstanden, die in Mengen von z.B. 2 bis 4 Massen% vorliegen können.

Bei Verwendung von reinem Polyoxymethylen mit geringem Comonomeranteil als Bindemittel kann bei der Herstellung von Spritzgußteilen mit größeren Wandstärken ein Problem auftreten, welches durch die hohe Kristallisationsgeschwindigkeit des Polyoxymethylens hervorgerufen wird.

Die Schmelze erstarrt an der Wand der beim Spritzgiessen verwendeten, normalerweise gekühlten Form schneller als im Inneren, d.h. der innere Bereich des Formkörpers kristallisiert später als der äußere Teil. Da die Kristallisation von einer Volumenkontraktion begleitet ist, entstehen Risse im Inneren des Formkörpers, da die bereits erstarrten Außenteile der Volumenkontraktion nicht mehr folgen können.

Dieser Nachteil tritt nicht auf, wenn statt eines einheitlichen Polyoxymethylens mit geringem Comonomergehalt eine Mischung zweier verschiedener Polyacetale B1 und B2 eingesetzt wird, wobei

B1)
aus 70 bis 90, vorzugsweise 80 bis 88 Gew.-%, bezogen auf B), eines Polyoxymethylenhomopolymerisats oder eines Polyoxymethylencopolymerisats mit maximal 10, vorzugsweise 2 bis 7 mol-% an Comonomereinheiten, und

B2)
aus 10 bis 30, vorzugsweise 10 bis 25, insbesondere 12 bis 20 Gew.-% eines Polyoxymethylencopolymerisats mit einem Comonomeranteil von 20 bis 99, vorzugsweise 25 bis 95 und insbesondere 25 bis 80 mol-% Poly-1,3-dioxolan, Poly-1,3-dioxan oder Poly-1,3-dioxepan oder deren Mischungen

bestehen.

Derartige Polyoxymethylenhomo- oder -copolymerisate sind dem Fachmann an sich bekannt und in der Literatur beschrieben.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung bevorzugte Polyoxymethylencopolymere B1) bzw. B2) enthalten ne-

ben den wiederkehrenden Einheiten $-OCH_2-$ noch wiederkehrende Einheiten der Formel

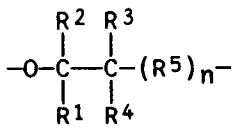

wobei $R^1$ bis $R^4$ unabhängig voneinander ein Wasserstoffatom, eine $C_1$-$C_4$-Alkylgruppe oder eine halogensubstituierte Alkylgruppe mit 1 bis 4 C-Atomen und $R^5$ eine $-CH_2-$, $-CH_2O-$, eine $C_1$-$C_4$-Alkyl- oder $C_1$-$C_4$-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel

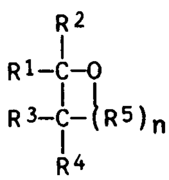

wobei $R^1$ bis $R^5$ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und Dioxepan als cyclische Ether genannt sowie linare Oligo- oder Polyformale wie Polydioxolan oder Polydioxepan als 5 Comonomere genannt.

Prinzipiell können die Polyoxymethylencopolymere B1) und B2) die gleichen wiederkehrenden Einheiten aufweisen, d.h. sich nur in derem Anteil unterscheiden.

Als Komponente B1) bzw. B2) ebenfalls geeignet sind Oxymethylenterpolymerisate, die beispielsweise durch Umsetzung von Trioxan, einem der vorstehend beschriebenen cyclischen Ether und einem dritten Monomeren, vorzugsweise einer bifunktionellen Verbindung der Formel

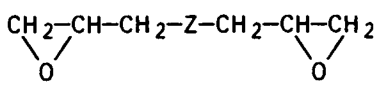

wobei Z eine chemische Bindung, -O- oder -ORO- (R = $C_1$-$C_8$-Alkylen oder $C_2$-$C_8$-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2-8-C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylenhomo- bzw. Copolymerisate haben Schmelzpunkte von mindestens 150°C und Molekulargewichte (Gewichtsmittelwert) im Bereich von 5 000 bis 150 000, vorzugsweise von 7 000 bis 60 000.

Als Komponente B2) ebenfalls geeignet sind
Poly-1,3-dioxolan $-O-CH_2-O-CH_2-CH_2-$ oder
Poly-1,3-dioxan $-O-CH_2-O-CH_2-CH_2-CH_2-$ oder
Poly-1,3-dioxepan $-O-CH_2-O-CH_2-CH_2-CH_2-CH_2-$ oder

deren Mischungen untereinander bzw. mit Polyoxymethylencopolymeren der vorstehend beschriebenen Art. Poly-1,3-dioxepan wird wegen seiner schnellen Depolymerisation unter sauren Bedingungen bevorzugt.

Poly-1,3-dioxolan, Poly-1,3-dioxan und Poly-1,3-dioxepan können nach analogen Verfahren wie die Polyoxymethylenhomo- bzw. -copolymerisate hergestellt werden, so daß sich hier nähere Angaben erübrigen. Das Molekulargewicht ist an sich nicht kritisch und liegt im allgemeinen im gleichen Bereich wie das Molekulargewicht der Polyoxymethylenhomo- oder -copolymerisate.

Unter den Bedingungen der Compoundierung oder Spritzgußverarbeitung tritt zwischen den Polyoxymethylenpolymerisaten B1) und B2) praktisch keine Umacetalisierung ein, d.h. es findet praktisch kein Austausch von Comonomereinheiten statt.

Damit wird auch der Kristallitschmelzpunkt der Komponente B1) nicht erniedrigt, es wird lediglich die Kristallisationszeit etwas erhöht (was gewünscht ist) und der kristalline Anteil etwas reduziert. Da der Kristallitschmelzpunkt der Hauptkomponente B1) nicht reduziert wird, bleibt die hohe Wärmeformbeständigkeit erhalten und die Gefahr des Verzugs bei der katalytischen Entbinderung wird verringert.

Zusätzlich können die thermoplastischen Massen auch übliche Zusatzstoffe und Verarbeitungshilfsmittel, die die rheologischen Eigenschaften der Mischungen bei der Verformung günstig beeinflussen, enthalten.

Die Herstellung der Mischungen aus Polyacetalbinder und Polymerpulver kann durch Mischen der Komponenten in üblichen Mischvorrichtungen wie Knetern oder Extrudern erfolgen. Bei der Abmischung auf Extrudern kann die Mischung extrudiert und granuliert werden.

Für die Verformung durch Spritzguß können die üblichen Schnecken- und Kolbenspritzgußmaschinen eingesetzt werden. Die Verformung erfolgt im allgemeinen bei Temperaturen von 170 bis 220°C und Drücken von 3 000 bis 20 000 kPa in Formen, die eine Temperatur von 50 - 140°C aufweisen. Zur Folien- und Profilextrusion oder zum Kalandrieren werden die üblichen Apparate eingesetzt.

Der Volumenanteil an PTFE-Pulver innerhalb der thermoplastischen Masse beträgt 20 bis 70 Vol.-%. Ein Teil dieses Volumenanteils kann gegebenenfalls durch die Steifigkeit erhöhende Füllstoffe wie Glasfasern, Kohlenstoffasern oder globuläre, mineralische Füllstoffe ersetzt sein, wobei dieser Anteil 50 % vom Volumenanteil des Polymerpulvers nicht übersteigen sollte.

Zur Entfernung des Bindemittels (Entbinderung) werden die nach der Verformung enthaltenen Körper vorzugsweise in Anlehnung an das Verfahren der älteren deutschen Patentanmeldungen P 39 29 869 bzw. 40 00 278 mit einer gasförmigen säurehaltigen Atmosphäre behandelt.

Diese Behandlung erfolgt nach dem erfindungsgemäßen Verfahren bei Temperaturen im Bereich von 100 bis 150°C über einen Zeitraum von 0,1 bis 50 h, vorzugsweise 0,5 bis 12 h.

Geeignete Säuren für die Behandlung in dieser Stufe des erfindungsgemäßen Verfahrens sind anorganische, bei Raumtemperatur bereits gasförmige, zumindest aber bei der Behandlungstemperatur verdampfbare Säuren. Beispielhaft seien die Halogenwasserstoffsäuren und HNO3 genannt. Geeignete organische Säuren sind solche, die bei Normaldruck eine Siedetemperatur von weniger als 130°C haben, z.B. Ameisensäure, Essigsäure oder Trifluoressigsäure oder deren Mischungen.

Weiterhin geeignet als Säure sind $BF_3$ oder $BF_3$-Etherate. Ganz allgemein hängt die erforderliche Behandlungsdauer von der Behandlungstemperatur und der Konzentration der Säure in der Behandlungsatmosphäre sowie von der Wandstärke der Formteile ab.

Wird ein Trägergas verwendet, so wird dies im allgemeinen vorher durch die Säure geleitet und mit dieser beladen. Das so beladene Trägergas wird dann auf die Behandlungstemperatur gebracht, die zweckmäßigerweise höher als die Beladungstemperatur ist, um eine Kondensation der Säure zu vermeiden.

Vorzugsweise wird die Säure dem Trägergas über eine Dosiereinrichtung zugemischt und die Mischung erwärmt, um eine Kondensation der Säure zu vermeiden.

Die vorstehend beschriebene Behandlung wird so lange durchgeführt, bis das Bindemittel praktisch vollständig entfernt ist. Dies läßt sich leicht an der Gewichtsabnahme erkennen.

Die Entfernung des Binders kann auch durch Eintauchen der Formkörper in die wäßrige Lösung einer anorganischen Säure, vorzugsweise einer Halogenwasserstoffsäure oder $HNO_3$, einer organischen Säure wie z.B. Ameisensäure, Essigsäure, Trifluoressigsäure oder durch Eintauchen in die 100%ige organische Säure oder in $BF_3$-Etherate.

Die Behandlung erfolgt bei Temperaturen im Bereich von 20°C bis 80°C über einen Zeitraum von wenigen Minuten bis zu einigen Stunden je nach Schichtdicke. Die entbinderten Produkte werden anschließend getrocknet. Dieses Verfahren eignet sich besonders für die Binderentfernung aus dünnwandigen Produkten wie Folien.

Die nach der Binderentfernung erhaltenen PTFE-Formkörper sind offenporös und mechanisch stabil und können so der entsprechenden Anwendung zugeführt werden.

Beispiel 1

In einen Doppelwellenextruder mit 30 mm Wellendurchmesser wurden 3,46 kg/h eines Polyoxymethylencopolymeren mit 5 Mol-% 1,3-Dioxepan als Comonomer, einem Schmelzindex MFI bei 190°C und 2,16 kp von 17 g/10 min sowie 6,54 kg/h eines Polytetrafluorethylenpulvers (Hostaflon TF 1620, Hoechst) mit ca. 200-300 µm Korngrösse eindosiert, um ein Extrudat zu erhalten, das 45 Vol.-% Polyoxymethylen und 55 Vol.-% des Polytetrafluorethylens enthält. Die Schmelztemperatur betrug 190 bis 200°C. Das Extrudat wurde granuliert und das Granulat bei 100°C im Vakuum über 20 h getrocknet.

Im Extrudat waren kaum noch einzelne Polytetrafluorethylenkörner mehr zu erkennen, sondern ca. 2 bis 10 µm breite miteinander verwebte Fasern oder Bändchen aus Polytetrafluorethylen. Unter dem Einfluß des Schergefälles im Extruder hatten sich die Polytetrafluorethylenkörnchen aufgrund des kalten Flusses zu den faserförmigen überstrukturen verschweißt.

Mittels einer Spritzgußmaschine wurden bei einer Massetemperatur um 200°C und einer Formtemepratur von 70°C Rundscheiben von 60 mm Durchmesser und 2 mm Dicke hergestellt.

Die sich anschließende Entfernung des Polyoxymethylens wurde in einem nahezu dichten Trokkenschrank mit einem Volumen von 50 l durchgeführt. Die Atmosphäre innerhalb des Trockenschranks wurde mittels eines Ventilators stark umgewälzt, um eine konstante Temperatur im gesamten Volumen und eine gute Wärmeübertragung auf den zu entbindernden Körper zu erreichen.

Der Trockenschrank wurde mit den spritzgegossenen Scheiben bestückt. Danach wurde der

Schrank 20 min lang mit einem Stickstoffstrom von 400 l/h durchströmt, um die Luft bis zu einem $O_2$-Gehalt von weniger als 1 - 2 % zu verdrängen. Gleichzeitig wurde die Atmosphäre im Trockenschrank auf 135 °C aufgeheizt. Die Entbinderung wurde gestartet mit dem Zudosieren von 7 ml/h 100%ige Salpetersäure zum Stickstoffstrom von 400 l/h, so daß die Konzentration der Salpetersäure in der Dosierung ca. 2 Vol.-% betrug.

Nach 1 h wurde die Dosierung der $HNO_3$ beendet und der Trockenschrank unter Abkühlung mit Stickstoff gespült. Die Rundscheiben waren frei von Polyoxymethylen. Es war weder Verzug noch Schrumpf festzustellen. Die Rundscheiben bestanden aus einem offenporösen Polytetrafluorethylengewebe von außerordentlich hoher Flexibilität und Zugfestigkeit.

Beispiel 2

Das getrocknete Granulat aus Beispiel 2 wurde einer Spritzgießmaschine zugeführt. Bei einer Massetemperatur von 190 bis 200$^0$C und einer Formtemperatur von ca. 80$^0$C wurden Schulterstäbe mit einer Dicke von 5 mm hergestellt.

Die sich anschließende Entfernung aus Polyoximethylen oder Entbinderung wurde wie in Beispiel 1 durchgeführt, mit dem Unterschied, daß anstelle der Salpetersäure 10 l/h $BF_3$ zudosiert wurden, so daß die Konzentration des $BF_3$ ca. 2 Vol.-% betrug. Nach 2 h wurde die Dosierung des $BF_3$ beendet und der Trockenschrank unter Abkühlung mit Stickstoff gespült. Die Stäbe waren frei von Polyoxymethylen. Es war kein Schrumpf oder Verzug festzustellen.

Beispiel 3

Das getrocknete Extrudat aus Beispiel 2 wurde mittels eines Einwellenextruders bei 200$^0$C aufgeschmolzen und durch eine ebenfalls auf 200$^0$C temperierte Breitschlitzdüse gefördert um eine Folie mit 50 cm Breite und 100 um Dicke herzustellen. Die Folie wurde über gekühlte Walzen geführt, durch ein Spulenwerk abgezogen und aufgewickelt.

Ein Teil der so erhaltenen Folie wurde wie in Beispiel 2 entbindert, wobei das BF3 bei 135 $^0$C nur ca. 10 min auf die Folie einwirkte. Durch Entfernung des Polyoxymethylens wurde eine reißfeste, offenporöse Polytetrafluorethylenfolie erhalten.

Beispiel 4

Die extrudierte Breitschlitzfolie aus Beispiel 3 wurde durch ein Bad geleitet, das bei Raumtemperatur eine 35%ige wäßrige Salpetersäure enthielt. Die Verweilzeit in der Salpetersäure betrug 5 min. Danach wurde die so erhaltene poröse Polytetrafluorethylenfolie in einem Trockenkanal getrocknet und wieder eingewickelt.

Beispiel 5

Die Rundscheiben aus Beispiel 1 wurden bei Raumtemperatur in Bortrifluoridethyletherat eingetaucht. Die Verweilzeit betrug 120 min. Anschließend wurden die polyacetalfreien Scheiben getrocknet. Die Scheiben zeigten keinen Schrumpf oder Verzug und waren mechanisch sehr stabil.

**Patentansprüche**

1. Verfahren zur Herstellung offenporösere Teile aus Polytetrafluorethylen durch Spritzguß oder Extrusion oder Kalandrieren, dadurch gekennzeichnet, daß man das pulverförmige PTFE in einer Schmelze aus einem Polyacetal oder einer Mischung von Polyacetalen dispergiert, die so erhaltene Mischung abkühlt, granuliert, das Granulat einer thermoplastischen Verarbeitung zuführt, durch Spritzgießen Formkörper oder durch Extrusion oder Kalandrieren Folien oder Profile herstellt, die Formkörper einem Medium aussetzt, das eine sauer reagierende chemische Verbindung enthält, wodurch das Polyacetal depolymerisiert wird und der offen porösere Formkörper zurückbleibt.

2. Verfahren nach Anspruch 1, dadurch gekennzeichnet, daß man als Polyacetal Polyoxymethylen benutzt, das 0 bis 10 Gew.-% eines Comonomeren enthält.

3. Verfahren nach Anspruch 1, dadurch gekennzeichnet, daß man als Polyacetal eine Mischung aus
   B1) 70 bis 90 Gew.-% eines Polyoxymethylenpolymerisats mit 0 bis 10 mol-% Comonomereinheiten und
   B2) 10 bis 30 Gew.-% eines Polyoxymethylencopolymerisats mit einem Comonomeranteil von 20 bis 99 mol-% 1,3-Dioxolan, 1,3-Dioxan oder 1,3-Dioxepan oder deren Mischungen oder homopolymeres Poly-1,3-dioxan, Poly-1,3-dioxolan oder Poly-1,3-dioxepan
   verwendet.

4. Verfahren nach den Ansprüchen 1 bis 3, dadurch gekennzeichnet, daß der Volumenanteil an PTFE-Pulver in der Masse 20 bis 70 Vol.-% 96 beträgt.

5. Verfahren nach den Ansprüchen 1 bis 4, dadurch gekennzeichnet, daß die Depolymerisation des Polyacetals bei 100 bis 150$^0$C unter

Normaldruck über einen Zeitraum von 0,1 bis 50 h, vorzugsweise von 0,5 bis 12 h unter dem Einfluß von Säuren, vorzugsweise Salpetersäure, Bortrifluorid oder Bortrifluorid-Etherat ausgeführt wird.

**6.** Verfahren nach den Ansprüchen 1 bis 4, dadurch gekennzeichnet, daß die Depolymerisation des Polyacetals bei 20 bis $80^0C$ über einen Zeitraum von 0,05 - 10 h unter dem Einfluß von Säuren in flüssiger Phase, vorzugsweise wäßriger Salpetersäure, Essigsäure oder Bortrifluorid-Etherat ausgeführt wird.

**7.** Verfahren nach den Ansprüchen 1 bis 6, dadurch gekennzeichnet, daß nach dem Entfernen des Polyacetals poröse PTFE-Formteile zurückbleiben, die Porositäten von 30 - 80 Vol.-% aufweisen.

**8.** Massen zur Herstellung der Formkörper nach den Ansprüchen 1 bis 7.

**9.** Massen nach Anspruch 8, dadurch gekennzeichnet, daß sie Polytetrafluorethylen enthalten

**10.** Massen nach Anspruch 8 und 9, dadurch gekennzeichnet, daß sie bis zu 50 Vol.-% des Volumenteils an PTFE-Pulver verstärkende Füllstoffe enthalten.

Europäisches Patentamt

# EUROPÄISCHER RECHERCHENBERICHT

Nummer der Anmeldung

EP 92 10 4939

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 188 114 (RAYCHEM LTD.)<br>* Seite 6, Zeile 15 - Zeile 25 *<br>* Seite 11; Beispiel 3 *<br>* Ansprüche 9-12 *<br>--- | 1-10 | C08J9/26<br>//C08L27/12 |
| A | GB-A-1 169 602 (AMERICAN CYANAMID COMPANY)<br>* Seite 2, Spalte 2, Zeile 86 - Zeile 97 *<br>* Anspruch 6 *<br>--- | 1-10 | |
| A | EP-A-0 309 259 (TOA NENRYO KOGYO K.K.)<br>* Ansprüche 1-17 *<br>----- | 1-10 | |
| | | | RECHERCHIERTE SACHGEBIETE (Int. Cl.5 ) |
| | | | C08J |

Der vorliegende Recherchenbericht wurde für alle Patentansprüche erstellt

| Recherchenort | Abschlußdatum der Recherche | Prüfer |
|---|---|---|
| DEN HAAG | 29 JUNI 1992 | René OUDOT |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)